# EUROPÄISCHE PATENTSCHRIFT

(11) **EP 2 610 177 B1**
(45) Veröffentlichungstag und Bekanntmachung des Hinweises auf die Patenterteilung: **08.03.2017**
(21) Anmeldenummer: 12197794.6
(22) Anmeldetag: 18.12.2012
(51) Int. Cl.: B64D 11/00, B64D 11/06, B60N 99/00

(54) **Fahrzeuginterieurvorrichtung**
Vehicle interior device
Dispositif intérieur de véhicule

(30) Priorität: 27.12.2011 DE 102011122188
(43) Veröffentlichungstag der Anmeldung: 03.07.2013
(73) Patentinhaber: Recaro Aircraft Seating GmbH & Co. KG, 74523 Schwäbisch Hall (DE)
(72) Erfinder: Höllerer, Markus, 74523 Schwäbisch Hall (DE)
(74) Vertreter: Daub, Thomas

(56) Entgegenhaltungen:
- EP-A1- 3 050 800
- WO-A1-2013/045501
- DE-A1-102008 007 586
- DE-B3-102005 038 972
- US-A1- 2009 093 932

## Beschreibung

Die Erfindung betrifft eine Fahrzeuginterieurvorrichtung nach dem Oberbegriff des Anspruchs 1.

Es ist bereits bekannt, bei einem Personentransport in Fahrzeugen Passagieren für einen Betrieb von persönlichen Elektronikgeräten, wie beispielsweise Laptops, eine Stromversorgungsmöglichkeit bereitzustellen. Hierzu wird üblicherweise in einem Innenraum eine Steckdose zur Verfügung gestellt, in die der Passagier ein Stromkabel des persönlichen Elektronikgeräts einstecken kann und die mit Strom aus einem fahrzeugeigenen Stromnetz versorgt wird.

Eine Flugzeuginterieurvorrichtung ist aus DE 10 2008 007 586 A1 bekannt, die alle Merkmale des Oberbegriffs des Anspruchs 1 offenbart. Die Erfindung betrifft eine Fahrzeuginterieurvorrichtung mit den Merkmalen des Anspruchs 1.

Die Erfindung geht aus von einer Fahrzeuginterieurvorrichtung, insbesondere von einer Flugzeuginterieurvorrichtung, mit zumindest einer Stromversorgungsschnittstelle und einer Stromversorgungseinheit. Unter einer "Fahrzeuginterieurvorrichtung" soll insbesondere eine in einen Fahrzeuginnenraum, beispielsweise in eine Flugzeugkabine, integrierte Vorrichtung verstanden werden. Insbesondere ist die Fahrzeuginterieurvorrichtung in einen Fahrzeugsitz, in eine Kabinenseitenwand, in einen Kabinenboden und/oder eine Kabinendecke integriert. Unter einer "Stromversorgungsschnittstelle" soll insbesondere ein Element verstanden werden, das dazu vorgesehen ist, Strom von einer Einheit an eine weitere Einheit zu übertragen und das dazu vorzugsweise einen Aufnahmebereich für ein Stromleitungsmittel, beispielsweise ein Koaxial- oder USB-Kabel, eines persönlichen Elektronikgeräts aufweist. Das Stromleitungsmittel des persönlichen Elektronikgeräts kann dabei über die Stromversorgungsschnittstelle empfangenen elektrischen Strom unmittelbar in einen Stromkreis des persönlichen Elektronikgeräts übertragen oder alternativ an eine Stromwandlungseinheit des persönlichen Elektronikgeräts, beispielsweise ein Netzgerät, zu einer Umformung von Stromkenngrößen, beispielsweise Spannung, Stromstärke und/oder Wechselstromfrequenz, übertragen. Unter einer "Stromversorgungseinheit" soll insbesondere eine Einheit verstanden werden, die elektrischen Strom zu einem Betrieb elektronischer Einheiten, insbesondere eines persönlichen Elektronikgeräts, zur Verfügung stellt. Die Stromversorgungseinheit kann beispielsweise als Stromabgabeeinheit, welche gespeicherte Energie enthält und in Form von elektrischem Strom abgeben kann, beispielsweise eine Batterie oder ein Akku, und/oder als Stromerzeugungseinheit, welche elektrischen Strom erzeugt, beispielsweise ein Stromgenerator oder eine Brennstoffzelle, und/oder als Stromabnehmereinheit, welche Strom aus einem Betriebsnetz eines Fahrzeugs, das zu einem Antrieb des Fahrzeugs verwendet wird, ausgebildet sein.

Es wird vorgeschlagen, dass die Stromversorgungseinheit von einer Energieharvestingeinheit gebildet ist. Unter einer "Energieharvestingeinheit" soll insbesondere eine Stromerzeugungseinheit verstanden werden, die dazu vorgesehen ist, in einer Umgebung der Energieharvestingeinheit vorhandene Energie aufzunehmen und in elektrischen Strom umzuwandeln, beispielsweise ein auf dem Seebeck-Effekt basierendes thermoelektrisches Element, welches Strom aus Umgebungswärme erzeugt, ein Piezoelement, das bei einer Fahrzeugbewegung entstehende Vibrationen zur Stromerzeugung ausnutzen kann, und/oder eine eine Solarzelle umfassende Stromerzeugungseinheit. Es kann insbesondere eine ubiquitär zur Verfügung stehende Energiequelle ausgenutzt werden, und somit können insbesondere Stromkosten eingespart werden.

Ferner wird vorgeschlagen, dass die Energieharvestingeinheit von einer Solarzelleneinheit gebildet ist. Unter einer "Solarzelleneinheit" soll insbesondere eine Einheit verstanden werden, welche dazu vorgesehen ist, mittels Sonnenlicht elektrischen Strom zu erzeugen. Die Solarzelleneinheit kann beispielsweise als eine Solarzelle aus mono- oder polykristallinem Silizium, wobei das Silizium mit anderen chemischen Elementen, wie beispielsweise Bor oder Gallium, dotiert sein kann, als eine organische Solarzelle, als eine Dünnschicht-Solarzelle, als eine Grätzel-Zelle und/oder eine andere, einem Fachmann als geeignet erscheinende Solarzelle ausgebildet sein. Insbesondere ist eine Oberfläche der Solarzelleneinheit bündig mit einer umgebenden Oberfläche ausgeführt, grundsätzlich kann jedoch auch die Oberfläche der Solarzellen gegenüber der umgebenden Oberfläche erhaben oder vertieft ausgeführt sein. Es kann insbesondere eine ubiquitär zur Verfügung stehende Energiequelle ausgenutzt werden, und somit können insbesondere Stromkosten eingespart werden. Besonders vorteilhaft kann die Fahrzeuginterieurvorrichtung in einem Passagierflugzeug eingesetzt werden, da tagsüber bei Flügen oberhalb einer Wolkendecke stets Sonnenlicht zur Verfügung steht.

Ferner wird eine Fahrzeugsitzvorrichtung, in die die Stromversorgungseinheit zumindest teilweise integriert ist, vorgeschlagen. Unter einer "Fahrzeugsitzvorrichtung" soll insbesondere eine Vorrichtung verstanden werden, die zumindest teilweise in einem Fahrzeugsitz angeordnet ist, beispielsweise in einem Bereich einer Armlehne, einer Rückenlehne, einer Sitzstruktur und/oder eines Esstisches. Es kann insbesondere eine vorteilhafte Positionierung der Stromversorgungseinheit in einer räumlichen Nähe zu dem persönlichen Elektronikgerät erreicht werden, wodurch insbesondere eine Anzahl benötigter Stromleitungen verringert werden kann.

Ferner wird vorgeschlagen, dass die Fahrzeugsitzvorrichtung zumindest einen Teil eines Esstisches bildet. Unter einem "Esstisch" soll insbesondere eine horizontal ausgerichtete Fläche verstanden werden, die an einem Fahrzeugsitz angeordnet ist und die dazu vorgesehen ist, einer in einem Fahrzeugsitz sitzenden Person eine Abstellfläche, insbesondere zu einem Abstellen von Mahlzeiten, zur Verfügung zu stellen, wobei der Esstisch an dem Fahrzeugsitz der Person angeordnet sein kann oder an einem weiteren Fahrzeugsitz. Bevorzugt ist der Esstisch mittels einer Gelenkverbindung anklappbar an eine Rückenlehneneinheit und/oder in einer Rückenlehneneinheit eines Fahrzeugsitzes angeordnet und dazu vorgesehen, einer Person, die sich in einem Fahrzeugsitz unmittelbar hinter dem Fahrzeugsitz, an dem der Esstisch angeordnet ist, befindet, zur Verfügung gestellt zu werden. Alternativ kann der Esstisch an einem anderen Element eines Fahrzeuginterieurs, beispielsweise an einem Wandelement, angeordnet sein. Insbesondere ist die Abstellfläche dazu vorgesehen, für eine Abstellung des persönlichen Elektronikgeräts verwendet zu werden. Es kann insbesondere eine vorteilhafte Nähe zu dem persönlichen Elektronikgerät erreicht werden, und Stromleitungselemente können eingespart werden.

Ferner wird vorgeschlagen, dass die Stromversorgungseinheit zumindest eine Aktivfläche mit differierenden Orientierungen und/oder zwei Aktivflächen mit differierenden Orientierungen aufweist. Unter einer "Aktivfläche" soll insbesondere eine photovoltaisch wirksame Fläche verstanden werden, bei der unter einer Einstrahlung von Licht bestimmter Wellenlänge, vorzugsweise von Sonnenlicht, ein elektrischer Strom erzeugt wird. Unter einer "Orientierung" einer Aktivfläche soll insbesondere eine Richtung eines Normalenvektors der Aktivfläche verstanden werden. Unter einer "Aktivfläche mit differierenden Orientierungen" soll insbesondere verstanden werden, dass die Aktivfläche zumindest zwei Bereiche aufweist, die miteinander einen Winkel einschließen, der zumindest 0,1 Grad, vorteilhaft zumindest 0,5 Grad und vorzugsweise zumindest 1 Grad von 0 Grad abweicht. Unter "zwei Aktivflächen mit differierenden Orientierungen" soll insbesondere verstanden werden, dass die Aktivflächen jeweils zumindest eine Orientierung aufweisen, wobei zumindest ein Paar von Orientierungen der beiden Aktivflächen voneinander abweichende Orientierungen aufweist. Bevorzugt sind bei zwei Aktivflächen einzelne Aktivflächen an unterschiedlichen, vorzugsweise einander gegenüberliegenden Seiten einer die Aktivflächen tragenden Einheit angeordnet. Es kann insbesondere eine hohe Strommenge gewonnen und eine große Sicherheit einer Stromgewinnung erreicht werden.

Ferner wird eine Energiezwischenspeichereinheit vorgeschlagen. Unter einer "Energiezwischenspeichereinheit" soll insbesondere eine Einheit verstanden werden, welche als Energiespeicher ausgebildet ist und dazu vorgesehen ist, von der Stromversorgungseinheit in zumindest einem Zustand, beispielsweise während kein persönliches Elektronikgerät von der Stromversorgungseinheit mit Strom versorgt wird, von der Stromversorgungseinheit aufgeladen zu werden und zumindest in einem weiteren Zustand entladen zu werden, wobei Strom an eine weitere Einheit, vorzugsweise über die Stromversorgungsschnittstelle an das persönliche Elektronikgerät, geliefert wird. Es kann somit insbesondere ansonsten ungenutzte Energie einer Verwendung zugeführt werden und auf zusätzlichen Strom verzichtet werden.

Ferner wird vorgeschlagen, dass die Stromversorgungsschnittstelle von einer USB-Schnittstelle gebildet ist. Unter einer "USB-Schnittstelle" soll insbesondere eine Schnittstelle verstanden werden, die dazu vorgesehen ist, ein USB-Kabel aufzunehmen. Es kann insbesondere eine weitverbreitete, standardisierte und von einem Typ des persönlichen Elektronikgeräts weitgehend unabhängige Stromversorgungsschnittstelle erreicht werden.

Ferner wird eine Stromversorgungslagereinheit, von der die Stromversorgungseinheit lösbar gelagert wird, vorgeschlagen. Unter einer "Stromversorgungslagereinheit" soll insbesondere eine Einheit verstanden werden, die dazu vorgesehen ist, eine Auflagefläche und/oder einen Aufnahmebereich für die Stromversorgungseinheit zur Verfügung zu stellen, auf der und/oder in dem die Stromversorgungseinheit in zumindest einem Zustand, der von einem Betriebszustand der Stromversorgungseinheit verschieden sein kann, lösbar gelagert ist. Unter "lösbar gelagert" soll insbesondere durch zumindest ein Befestigungsmittel in einer festen Position gehalten verstanden werden, wobei das Befestigungsmittel, vorzugsweise unter Verzicht auf spezielles Werkzeug, gelöst werden und die Stromversorgungseinheit entnommen werden kann. Vorzugsweise kann die Stromversorgungseinheit nach einer Entnahme zu einem Betrieb an einer von einem Benutzer gewählten Position aufgestellt werden. Beispielsweise kann die Stromversorgungseinheit entnommen werden, um weiteren Platz auf einem Esstisch, in den die Stromversorgungseinheit integriert ist, zu schaffen. Es können somit insbesondere eine flexible Positionierung und eine effiziente Stromgewinnung erreicht werden.

Ferner wird eine Verbindungseinheit, die zu einer Verbindung der Stromversorgungseinheit mit zumindest einer Stromversorgungseinheit zumindest einer weiteren Fahrzeuginterieurvorrichtung vorgesehen ist, vorgeschlagen. Unter einer "Verbindungseinheit" soll insbesondere eine Einheit verstanden werden, welche zumindest ein Stromleitungselement umfasst, das dazu vorgesehen ist, Strom von der Stromversorgungseinheit zu zumindest einer gemeinsamen Stromversorgungsschnittstelle, die beispielsweise das persönliche Elektronikgerät mit Strom versorgt, und/oder einer gemeinsamen Energiezwischenspeichereinheit und/oder direkt zu einer weiteren Stromversorgungseinheit zu leiten. Alternativ oder zusätzlich kann die Verbindungseinheit dazu dienen, die Stromversorgungseinheit und/oder mehrere Stromversorgungseinheiten mit einem Betriebsnetz des Fahrzeugs zu verbinden und überschüssigen Strom in dieses einzuspeisen und/oder Strom von diesem zusätzlich zu empfangen. Es kann insbesondere eine hohe Strommenge gewonnen und eine sichere Stromgewinnung erreicht werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Fahrzeugsitz mit einer erfindungsgemäßen Fahrzeuginterieurvorrichtung,
- Fig. 2: einen Esstisch des Fahrzeugsitzes mit einer Stromversorgungslagereinheit, die eine Energieharvestingeinheit lösbar lagert und
- Fig. 3: eine alternative Fahrzeuginterieurvorrichtung mit einem in einen Sitzfuß integrierten Piezoelement,
- Fig. 4: eine alternative Fahrzeuginterieurvorrichtung mit einem in einen Sitzboden integrierten Thermoelement.

### Beschreibung der Ausführungsbeispiele

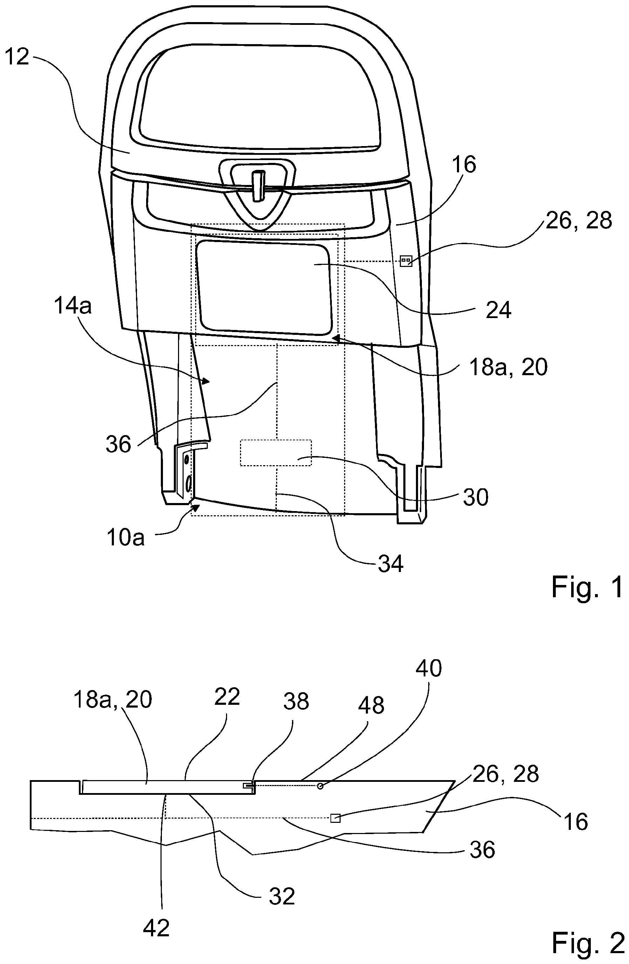

Fig. 1 zeigt einen als Fluggastsitz ausgebildeten Fahrzeugsitz 12 mit einer als Flugzeuginterieurvorrichtung ausgebildeten erfindungsgemäßen Fahrzeuginterieurvorrichtung 10a. Die Fahrzeuginterieurvorrichtung 10a umfasst eine von einer USB-Schnittstelle 28 gebildete Stromversorgungsschnittstelle 26 und eine von einer Energieharvestingeinheit gebildete Stromversorgungseinheit 18a. Die Stromversorgungseinheit 18a dient zu einer Stromversorgung eines persönlichen Elektronikgeräts einer in einem Fahrzeug, in dem die Fahrzeuginterieurvorrichtung 10a installiert ist, transportierten Person. Zu einer Stromversorgung des persönlichen Elektronikgeräts wird ein USB-Kabel des persönlichen Elektronikgeräts in die USB-Schnittstelle 28 eingesteckt. Die Stromversorgungseinheit 18a ist in eine Fahrzeugsitzvorrichtung 14a, die einen Teil eines ausklappbaren Esstisches 16 bildet, integriert. Der Esstisch 16 ist in einem eingeklappten Zustand gezeigt. Die Stromversorgungseinheit 18a ist von einer Solarzelleneinheit 20 gebildet, die zwei Aktivflächen 22, 24 mit differierenden Orientierungen im Raum aufweist. Die differierenden Orientierungen im Raum sind dadurch realisiert, dass die Solarzelleneinheit 20 auf einer Vorder- und einer Rückseite des Esstisches 16 jeweils eine der Aktivflächen 22, 24 aufweist. Somit steht sowohl in einem aufgeklappten als auch in dem eingeklappten Zustand des Esstisches 16 zumindest eine der Aktivflächen 22, 24 zu einer Stromerzeugung zur Verfügung. Alternativ oder zusätzlich kann sich zumindest eine der Aktivflächen 22, 24 auch fortlaufend zusätzlich um zumindest einen Seitenbereich des Esstisches 16 erstrecken, wodurch die Aktivfläche 22, 24 mehrere Orientierungen aufweist. Die Aktivflächen 22, 24 sind mit einem sonstigen Oberflächenbereich 48 des Esstisches 16, welcher als eine Aufstellfläche für Gegenstände vorgesehen ist, bündig abschließend ausgeführt. Die Aktivflächen 22, 24 der Solarzelleneinheit 20 können alternativ auch den sonstigen Oberflächenbereich 48 überstehen oder dem sonstigen Oberflächenbereich 48 gegenüber vertieft ausgeführt sein. Die Aktivflächen 22, 24 sind mit einer Schutzbeschichtung überzogen, so dass insbesondere die Aktivfläche 22 in einem ausgeklappten Zustand des Esstisches 16 ebenfalls als Aufstellfläche genutzt werden kann. Die Solarzelleneinheit 20 weist neben den Aktivflächen 22, 24, welche beispielsweise eine Antireflexbeschichtung aufweisen können, weitere, nicht dargestellte Elemente auf, wie beispielsweise eine Schicht, in der ein Stromkabel zu einer Abnahme erzeugten Stroms angeschlossen werden kann.

Über innerhalb des Esstisches 16 verlaufende Stromleitungselemente 36, die von Koaxialkabeln gebildet sind, sind die Aktivflächen 22, 24 der Solarzelleneinheit 20 miteinander, mit einer Energiezwischenspeichereinheit 30, die in einem Bereich der Rückenlehne des Fahrzeugsitzes 12 untergebracht ist, und mit der USB-Schnittstelle 28 verbunden. Die Energiezwischenspeichereinheit 30 ist von einem aufladbaren Akku gebildet. Die USBSchnittstelle 28 ist in einem seitlichen Bereich des Esstisches 16 angeordnet und sowohl in dem ausgeklappten wie in dem eingeklappten Zustand des Esstisches 16 zugänglich. Über eine Verbindungseinheit 34, die aus Stromleitungskabeln besteht, ist die Stromversorgungseinheit 18a der Fahrzeuginterieurvorrichtung 10a mit weiteren Stromversorgungseinheiten 18a weiterer Fahrzeug-interieurvorrichtungen 10a in einer Sitzreihe verbunden, welche somit zusammenwirken können. Die Stromversorgungseinheiten 18a können beispielsweise gemeinsam eine einzelne Stromversorgungsschnittstelle 26 mit Strom versorgen und somit höhere Leistungen zur Verfügung stellen und/oder gemeinsam eine oder mehrere Energiezwischenspeichereinheiten 30 aufladen. Alternativ oder zusätzlich kann über die Verbindungseinheit 34 die Stromversorgungseinheit 18a auch mit einem Betriebsnetz des Fahrzeugs verbunden sein und überschüssigen Strom in dieses einspeisen.

Fig. 2 zeigt eine Stromversorgungslagereinheit 32, von der die Stromversorgungseinheit 18a lösbar gelagert ist. Der besseren Übersichtlichkeit halber ist nur ein oberer Teil des Esstisches 16 dargestellt. Die Stromversorgungslagereinheit 32 weist eine Ausnehmung in dem Esstisch 16 auf, in die eine Teileinheit der Solarzelleneinheit 20, die die Aktivfläche 22 aufweist, eingelegt wird. In einem in die Ausnehmung eingelegten Zustand der Stromversorgungseinheit 18a schließt die Aktivfläche 22 bündig mit dem sonstigen Oberflächenbereich 48 des Esstisches 16 ab. Zu einer lösbaren Befestigung der Teileinheit weist die Stromversorgungslagereinheit 32 ein Halteelement 38 auf, das als ein in eine dafür vorgesehene Ausnehmung der Teileinheit der Solarzelleneinheit 20 unterhalb der Aktivfläche 22 eingreifender, rückziehbarer Haltestab ausgebildet ist. Durch einen Druck auf einen Betätigungsknopf 40 wird das Halteelement 38 zurückgezogen, so dass die Teileinheit der Solarzelleneinheit 20 aus der Ausnehmung des Esstisches 16 entnommen werden kann. Nach einer Entnahme der Teileinheit kann diese an anderen Orten zu einer Stromerzeugung eingesetzt werden, beispielsweise kann sie mittels nicht dargestellter Befestigungsmittel an einem Fenster angebracht werden. Die Teileinheit ist hierzu mittels eines als ausziehbares Stromkabel ausgeführten Verbindungselements 42 an einer Unterseite mit den Stromleitungselementen 36 in dem Esstisch 16 und über die Stromleitungselemente 36 mit der USB-Schnittstelle 28 und der Energiezwischenspeichereinheit 30 verbunden.

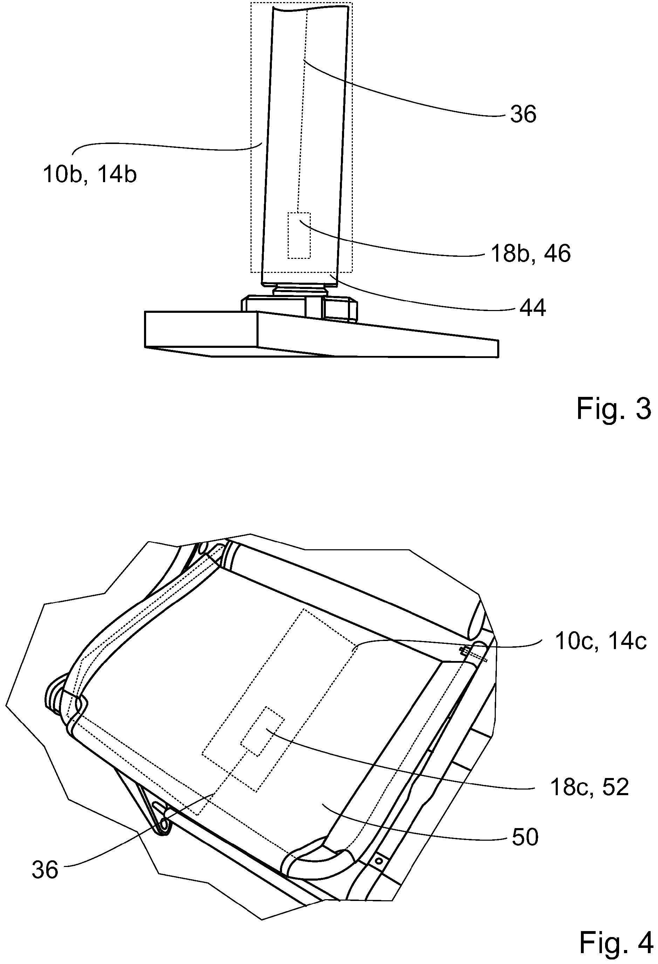

Fig. 3 zeigt als eine alternative oder zusätzliche Ausführung einen Teil einer Fahrzeuginterieurvorrichtung 10b. In dieser Ausführungsvariante weist die Fahrzeuginterieurvorrichtung 10b eine Fahrzeugsitzvorrichtung 14b auf, die in einen Sitzfuß 44 integriert ist. Der Sitzfuß 44 dient zu einer Abfederung von Vibrationen während einer Fahrzeugbewegung, wozu der Sitzfuß 44 eine Federeinheit aufweist. Eine Stromversorgungseinheit 18b, die in die Fahrzeugsitzvorrichtung 14b integriert ist, ist von einer Piezoeinheit 46 aus mehreren Piezoelementen gebildet, welche die Vibrationen in Strom umwandelt. Über Stromleitungselemente 36 wird der erzeugte Strom zu einer Stromversorgungsschnittstelle 26 und/oder zu einer Energiezwischenspeichereinheit 30 weitergeleitet.

Fig. 4 zeigt eine weitere alternative oder zusätzliche Ausführung einer Fahrzeuginterieurvorrichtung 10c mit einer Stromversorgungseinheit 18c, die von einem auf dem Seebeck-Effekt basierenden Thermoelement 52 gebildet ist, das Umgebungswärme in Strom umwandelt. Die Stromversorgungseinheit 18c ist als Teil einer Fahrzeugsitzvorrichtung 14c in einen Sitzboden 50 eingebaut.

**Bezugszeichen**

| | | | |
|---|---|---|---|
| 10a | Fahrzeuginterieurvorrichtung | 44 | Sitzfuß |
| 10b | Fahrzeuginterieurvorrichtung | 46 | Piezoeinheit |
| 10c | Fahrzeuginterieurvorrichtung | 48 | Oberflächenbereich |
| 12 | Fahrzeugsitz | 50 | Sitzboden |
| 14a | Fahrzeugsitzvorrichtung | 52 | Thermoelement |
| 14b | Fahrzeugsitzvorrichtung | | |
| 14c | Fahrzeugsitzvorrichtung | | |
| 16 | Esstisch | | |
| 18a | Stromversorgungseinheit | | |
| 18b | Stromversorgungseinheit | | |
| 18c | Stromversorgungseinheit | | |
| 20 | Solarzelleneinheit | | |
| 22 | Aktivfläche | | |
| 24 | Aktivfläche | | |
| 26 | Stromversorgungsschnittstelle | | |
| 28 | USB-Schnittstelle | | |
| 30 | Energiezwischenspeichereinheit | | |
| 32 | Stromversorgungslagereinheit | | |
| 34 | Verbindungseinheit | | |
| 36 | Stromleitungselement | | |
| 38 | Halteelement | | |
| 40 | Betätigungsknopf | | |
| 42 | Verbindungselement | | |

## Patentansprüche

1. Fahrzeuginterieurvorrichtung, insbesondere Flugzeuginterieurvorrichtung, mit zumindest einer Stromversorgungsschnittstelle (26) und mit zumindest einer Stromversorgungseinheit (18c),
wobei die Stromversorgungseinheit (18a; 18b; 18c) von einer Energieharvestingeinheit gebildet ist, **dadurch gekennzeichnet, dass** die Energieharvestingeinheit zumindest ein Piezoelement umfasst, das bei einer Fahrzeugbewegung entstehende Vibrationen zur Stromerzeugung ausnutzen kann.

2. Fahrzeuginterieurvorrichtung nach Anspruch 1,
**dadurch gekennzeichnet, dass**
die Energieharvestingeinhheit von einer Solarzelleneinheit (20) umfasst.

3. Fahrzeuginterieurvorrichtung nach Anspruch 1,
**gekennzeichnet durch**
eine Fahrzeugsitzvorrichtung (14a; 14b; 14c), in die die Stromversorgungseinheit (18a; 18b; 18c) zumindest teilweise integriert ist.

4. Fahrzeuginterieurvorrichtung nach Anspruch 3,
**dadurch gekennzeichnet, dass**
die Fahrzeugsitzvorrichtung (14a) zumindest einen Teil eines Esstisches (16) bildet.

5. Fahrzeuginterieurvorrichtung nach Anspruch 2,
**dadurch gekennzeichnet, dass**
die Stromversorgungseinheit (18a) zumindest eine Aktivfläche (22, 24) mit differierenden Orientierungen und/oder zwei Aktivflächen (22, 24) mit differierenden Orientierungen aufweist.

6. Fahrzeuginterieurvorrichtung nach einem der vorhergehenden Ansprüche,
**gekennzeichnet durch**
eine Energiezwischenspeichereinheit (30).

7. Fahrzeuginterieurvorrichtung nach einem der vorhergehenden Ansprüche,
**dadurch gekennzeichnet, dass**
die Stromversorgungsschnittstelle (26) von einer USB-Schnittstelle (28) gebildet ist.

8. Fahrzeuginterieurvorrichtung nach einem der vorhergehenden Ansprüche,
**gekennzeichnet durch**
eine Stromversorgungslagereinheit (32), von der die Stromversorgungseinheit (18a) lösbar gelagert wird.

9. Fahrzeuginterieurvorrichtung nach einem der vorhergehenden Ansprüche,
**gekennzeichnet durch**
eine Verbindungseinheit (34), die zu einer Verbindung der Stromversorgungseinheit (18a; 18b; 18c) mit zumindest einer Stromversorgungseinheit (18a; 18b; 18c) zumindest einer weiteren Fahrzeuginterieurvorrichtung (10a, 10b, 10c) vorgesehen ist.

## Claims

1. Vehicle interior device, in particular airplane interior device, with at least one power supply interface (26) and with at least one power supply unit (18c), the power supply unit (18a; 18b; 18c) being implemented by an energy harvesting unit,
**characterised in that**
the energy harvesting unit comprises at least one piezo element capable of utilising vibrations generated in a movement of a vehicle for power production.

2. Vehicle interior device according to claim 1,
**characterised in that**
the energy harvesting unit is implemented by a solar cell unit (20).

3. Vehicle interior device according to claim 1,
**characterised by**
a vehicle seat device (14a; 14b; 14c) into which the power supply unit (18a; 18b;18c) is at least partly integrated.

4. Vehicle interior device according to claim 3,
**characterised in that**
the vehicle seat device (14a) forms at least part of an eating table (16).

5. Vehicle interior device according to claim 2,
**characterised in that**
the energy supply unit (18a) comprises at least one active surface (22, 24) having differing orientations and/or two active surfaces (22, 24) having differing orientations.

6. Vehicle interior device according to one of the preceding claims,
**characterised by**
an energy intermediate-storage unit (30).

7. Vehicle interior device according to one of the preceding claims,
**characterised in that**
the power supply interface (26) is implemented by a USB interface (28).

8. Vehicle interior device according to one of the preceding claims,
**characterised by**
a power supply support unit (32), by which the power supply unit (18a) is releasably supported.

9. Vehicle interior device according to one of the preceding claims,
**characterised by**
a connection unit (34) provided for connecting the power supply unit (18a; 18b; 18c) to at least one power supply unit (18a; 18b; 18c) of at least one further vehicle interior device (10a, 10b, 10c).

## Revendications

1. Dispositif intérieur de véhicule, notamment dispositif intérieur d'aéronef, avec au moins un interface d'alimentation en courant (26) et avec au moins une unité d'alimentation en courant (18c), l'unité d'alimentation en courant (18a ; 18b ; 18c) étant implémentée par une unité récupératrice d'énergie
**caractérisé en ce que**
l'unité récupératrice d'énergie comporte au moins un élément piézo, lequel est capable d'utiliser des vibrations générées dans un mouvement de véhicule pour produire de courant électrique.

2. Dispositif intérieur de véhicule selon la revendication 1,
**caractérisé en ce que**
l'unité récupératrice d'énergie est implémentée par une unité de cellules solaires (20).

3. Dispositif intérieur de véhicule selon la revendication 1,
**caractérisé par**
un dispositif de siège de véhicule (14a ; 14b ; 14c), dans lequel l'unité d'alimentation en courant (18a ; 18b ; 18c) est intégrée au moins partiellement.

4. Dispositif intérieur de véhicule selon la revendication 3,
**caractérisé en ce que**
le dispositif de siège (14a) forme au moins part d'une table à manger (16).

5. Dispositif intérieur de véhicule selon la revendication 2,
**caractérisé en ce que**
l'unité d'alimentation en courant (18a) comporte au moins une surface active (22, 24) ayant des orientations différentes et/ou deux surfaces actives (22, 24) ayant des orientations différentes.

6. Dispositif intérieur de véhicule selon l'une quelconque des revendications précédentes,
**caractérisé par**
une unité à accumulation intermédiaire d'énergie (30).

7. Dispositif intérieur de véhicule selon l'une quelconque des revendications précédentes,
**caractérisé en ce que**
l'interface d'alimentation en courant (26) est implémenté par un interface USB (28).

8. Dispositif intérieur de véhicule selon l'une quelconque des revendications précédentes,
**caractérisé par**
une unité à support d'alimentation en courant (32), par le biais de laquelle l'unité d'alimentation en courant (18a) est supportée relâchablement.

9. Dispositif intérieur de véhicule selon l'une quelconque des revendications précédentes,
**caractérisé par**
une unité à connexion (34) prévue à connecter l'unité d'alimentation en courant (18a ; 18b ; 18c) avec au moins une unité d'alimentation en courant (18a ; 18b ; 18c) d'au moins un dispositif intérieur de véhicule (10a, 10b, 10c) additionnel.
